# EUROPEAN PATENT APPLICATION

(11) **EP 2 169 534 A1**
(43) Date of publication of application: **31.03.2010**
(21) Application number: 08165443.6
(22) Date of filing: 29.09.2008
(51) Int. Cl.: G06F 3/14, H04N 5/63

(54) **Remote power supply**

(71) Applicant: Daktronics, Inc., Brookings, SD 57006-5128 (US)
(72) Inventor: Hansen, Ryan M., Watertown, SD 57201 (US); Mehlum, Harvey L., Ramona, SD 57054 (US); Burghardt, Neil R., Brookings, SD 57006 (US); Mueller, Matthew R., Brookings, SD 57006 (US); Gloege, Chad N., Brookings, SD 57006 (US)
(74) Representative: Hepworth, John Malcolm

(57) **Abstract**

A remote power supply arrangement for graphical display systems. The remote power supply places one or more power supplies in a separate location, some distance apart from the graphical display, rather than within the display cabinet or module itself. Power is then transferred from the power supply to the display by electrical cords. The remote power supply provides lighter weight displays, less noise near the displays, and improved maintenance and repair. The invention includes apparatus, methods of providing remote power to displays.

## Description

### CROSS REFERENCES TO RELATED APPLICATIONS

This application claims benefit from the earlier filed U.S. Provisional Application No. 60/808,213 entitled "Remote Power Supply", filed May 24, 2006, which is hereby incorporated into this application by reference as if fully set forth herein.

### BACKGROUND OF THE INVENTION

### FIELD OF THE INVENTION

The present invention relates to graphical display systems, which may include large video displays, signage, tickers, and the like. Particularly, the present invention relates to power supply for graphical displays. More particularly, the present invention relates to apparatus and methods for remote power supply for graphical displays, the present invention providing more efficient and flexible power supply, improved failure recovery and maintenance, and more efficient and more economical operation of such graphical display systems.

### DESCRIPTION OF THE PRIOR ART

In the LED display industry, power supplies are traditionally found within the casing of the display itself, or within a display component or module (such as a tile or panel in a display made up of several such modules). While this is sufficient for most applications, it causes problems in certain applications for a number of reasons.

Firstly, power supplies generate heat. Therefore, each cabinet, module, or tile typically includes a ventilation system such as using forced air to cool the electronics. This method uses fans to draw cool air into the display and then blows out heated air, which contains heat generated from the display components. This process generates noise which can be significant. The generated noise does not cause problems for some applications, such as for a major league sport setting or for a roadside marquee. But, during other events having quieter portions, such as a church service or lecture, fan noise could cause unwanted distraction and interfere with the event.

Secondly, including power supplies within the cabinet, module, or tile adds additional weight to the module. While this may be acceptable for certain applications such as with a fixed installation display, it can be troublesome for temporary, portable, or modular display systems since the weight of the components of the display can make assembly, disassembly, and movement of the display/modules more difficult. Also, in suspended installations, the structural members of the building will limit the amount of weight that can be suspended, thus reducing the size of display that can be suspended; this is a particular problem for temporary installations, where the facility may not have been designed or constructed to sustain such weight.

Thirdly, with the power supplies located within the interior of the display, it can be difficult to service quickly. Power supply failures are one of the most common failures of an LED display. To replace a failed power supply, a technician must gain access to these components. In cases where time is of essence, such as a failure during an event, access can be time-consuming, especially if the display is suspended. Further, the power must also be shut off during this process to prevent injuries to the technician. Therefore, everyone watching the LED display knows an error occurred, and the display will be disrupted, which is undesirable.

There are therefore deficiencies and problems with the prior art systems and methods. The present invention overcomes problems of the prior art.

### SUMMARY OF THE INVENTION

The general purpose of the present invention is to provide a more efficient system for power supply for graphical displays.

According to one embodiment of the present invention, there is provided apparatus for remote power supply for a display module. The remote power supply places one or more power supplies in a separate location, some distance apart from the graphical display, rather than within the display cabinet or module itself. Power is then transferred from the power supply to the display by electrical cords.

According to another embodiment of the present invention, there is provided a method for remote power supply for a display module.

According to still another embodiment of the present invention, there is provided a method for maintenance and repair of graphical display system.

One significant aspect and feature of the present invention is a remote power supply which places the bulk of the weight and heat and noise of such power supply apart from a graphical display module.

Another significant aspect and feature of the present invention is a system for distributing power to a plurality of display modules.

Still another significant aspect and feature of the present invention is a method for efficient power supply for graphical displays.

Yet another significant aspect and feature of the present invention is a method for efficient fault repair and maintenance of a graphical display system.

Having thus described embodiments of the present invention and set forth significant aspects and features of the present invention, it is the principal object of the present invention to provide an improved power supply arrangement for graphical display systems.

### BRIEF DESCRIPTION OF THE DRAWINGS

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:

**FIG. 1** a schematic illustration of a remote power supply;

**FIG. 2** a schematic illustration of components of a graphical display system showing a remote power supply supplying display modules; and,

**FIG. 3** is a schematic illustration of a redundant power distribution arrangement utilizing remote power supply.

### DETAILED DESCRIPTION OF THE PREFERRED EMBODIMENTS

The invention is apparatus and methods for remote power supply for graphical display systems. The invention is particularly useful for large LED displays, but is applicable to other graphical display systems as well.

Conventional large LED graphical displays typically have one or more power supply located in the casing of the display, and typically each display tile, panel, or module will have a power supply within or attached to the module. This distributes the power supply function among the modules, but increases display weight, increases individual module weight, requires cooling fans for the power supplies to be located in or attached to the display or module, and creates difficulty when replacing a failed power supply during an event.

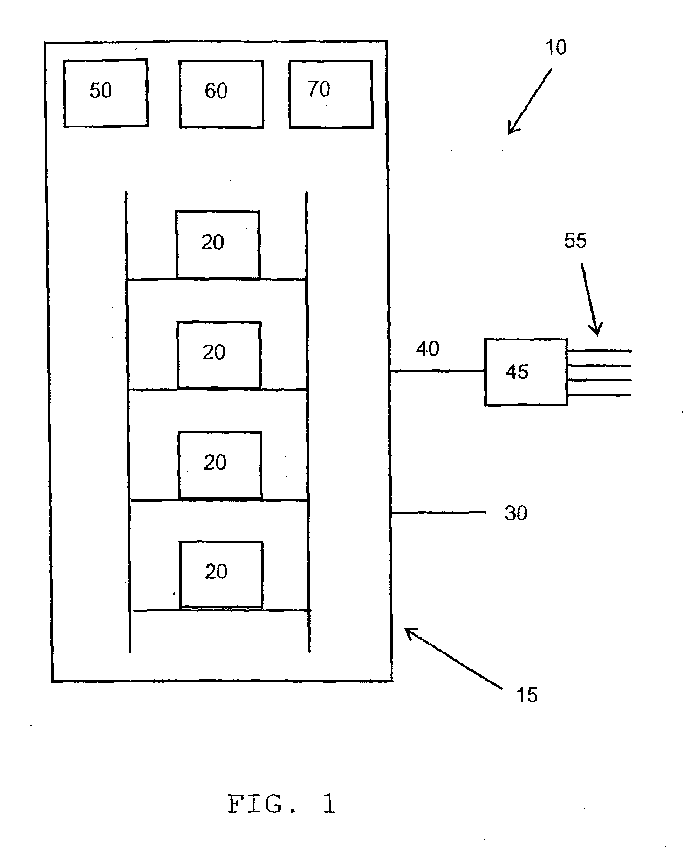

To overcome these problems with the prior art, the present invention provides a remote power supply 10, illustrated in **FIG. 1****.** This approach removes the traditional power supplies from the display cabinet, panel, or module, and places it within a separate cabinet 15 placed a distance from the graphical display. Multiple remote power units 20, which may be required to supply multiple modules, are preferably located in a single cabinet 15, as **FIG. 1** illustrates. A power rack in the power supply cabinet comprises several power units 20 that are interconnected to distribute the power evenly to the display panels, via redundant power integration and switching system 70. Remote power supply 10 receives AC power input at 30, converts power in AC/DC converter 50, provides DC power output at 40, and has cooling system 60 which may include various fans. In addition to the advantages of remote power supply, this arrangement provides some tolerance to failure of a particular power unit. Should one power unit fail, the remaining units supply additional power to keep the display modules properly powered and functioning, provided the remaining power units have sufficient power output capacity. Therefore, if this fault tolerance is desired, it is important to include enough power units of sufficient power output capacity to power the graphical display plus one or more additional power units to provide the required extra capacity. An indicator alerts support personnel of a failed power unit, allowing them to replace the unit for a new one without shutting off power to the display.

The remote power can be housed a distance away from the display itself, further reducing the noise level at the display. Some potential locations for the power supply include an electrical closet, or in the case of a concert, underneath the stage. For example, in some embodiments the remote power supply can be located up to approximately 150 feet from the display. Shorter or longer distances are possible, depending on acceptable cable lengths and power losses in cabling, and so forth. In some cases, where having the remote power supply a distance away from the display is not required, the same remote power supply could be located near or attached to the display; this still provides the flexibility to locate the power supply remotely when it is advantageous to do so.

In order to efficiently supply a large number of display modules or panels, the remote power supply comprises power distribution means 45. Preferably, a smaller number of main power cords or cables transmit power from the remote power supply to the graphical display, and this power is split to a larger number of smaller cords 55 or terminations to supply individual panels or modules. This arrangement reduces the number of lengthy cords or cables from the remote power supply, while still providing system flexibility.

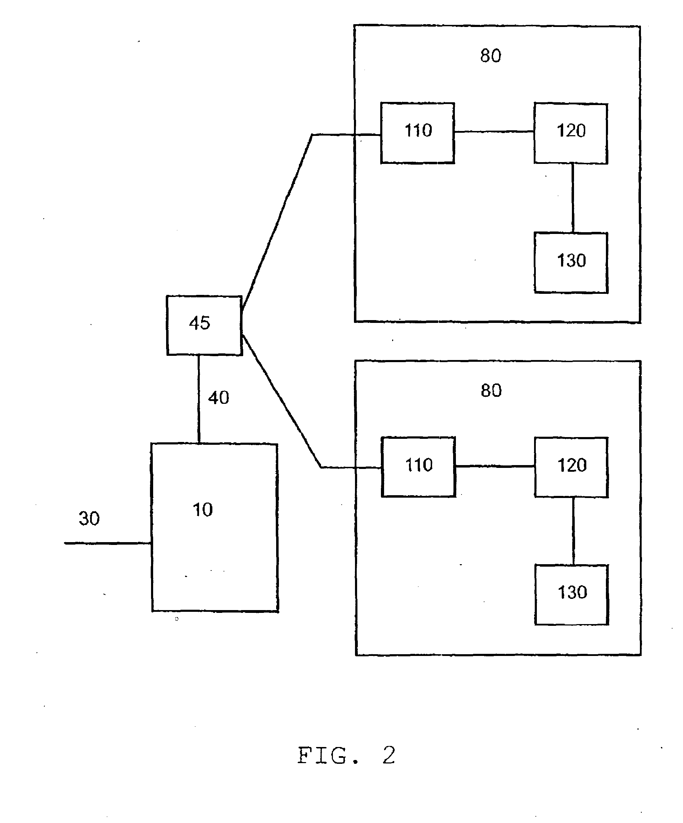

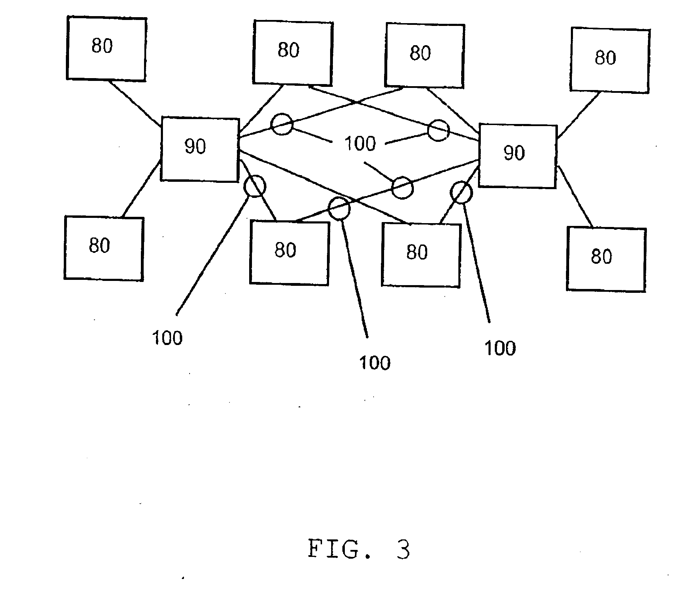

Preferably, the substantial portion of the power-related components are located remote from the graphical display, especially those associated with significant heat, weight, and noise. In some embodiments, the remote power supply comprises a cabinet with 3-phase AC input power, and a rack of multiple power units, AC to DC conversion, cooling system, and with one or more DC output cables or cords for connection to the graphical display. As schematically illustrated in **FIG. 2**, certain elements, however, are preferably located near or integrated with the LED display panel(s) or modules 80 having display elements 130 (such as and LED board and logic, for example). For example, power distribution and conditioning system 110, and a small DC to DC converter unit 120 are preferably located at or near the display modules as shown in **FIG. 2** and **FIG. 3****,** which also illustrate a mode of operation. Note that **FIG. 2** shows a simplified version for illustration purposes, showing only two of the display modules; typically, a display system would utilize more than two display modules, and may have additional power distribution systems 45, additional remote power supplies 10, additional cabling and connectors, and so forth, not shown for clarity of illustration. Additional components, connections, and features have been omitted from the figures to more clearly show the elements being illustrated. For example, additional cabling, data transmission and circuitry, control units and preprocessing computers, and additional subcomponentry is provided as is known in the art.

In **FIG. 3****,** an enhancement is illustrated, in which redundant power supply is provided by us of local power distribution boards 90. Multiple display modules 80 (or LED panels, etc.) are supplied by a local power distribution board 90 which receive power from remote power supply 10 and distributes power via redundant power distribution 100 (not all instances of redundant power distribution 100 are numbered on **FIG. 3** for clarity). The elements located at or near the display panels are lower power consumption elements with less noise and heat generation, while the elements located remotely, such as the AC-to-DC conversion, and cooling fans, use more power and generate more noise and heat.

The remote power supply provides much needed improvements to LED display systems. These improvements include:
1. reduced heat within the display cabinet, eliminating the need for a ventilation system and reducing noise at the display;
2. reduced weight of the display, enabling a faster assembly and disassembly for modular display systems, and facilitating suspended display applications with larger displays or reduced suspension loads;
3. minimized display downtime by eliminating the need to remove the display back sheet to access power supplies for repair or replacement, and providing a remote power supply which can be accessed for power unit repair or replacement without turning off power to the display; and,
4. current sharing and the ability to hot swap power components, where a power unit or rectifier which failed, could be replaced while the remaining components were still functioning and providing the required power to the display.

To provide an increased system reliability and seamless performance in a power system fault situation, the remote power supply can supply the modules in a redundant manner, with a local power distribution board in proximity to the LED modules, to manage the redundant power and supply the graphical display modules with power even in a fault condition. This arrangement is schematically illustrated in **FIG. 3****.** Redundant remote power supplies can independently supply the local power distribution boards 90. Alternatively, local power distribution boards 90 can redundantly supply power to LED modules 80. Combination redundancy is also envisioned, with redundant remote power units, and with redundant power transmission from local power distribution boards.

Houses of worship would greatly benefit from the remote power supply. The traditional display emits too much noise when put in a subdued environment such as this. Without this invention, the noise of the fans may distract those in the congregation from the message being delivered. Any venue where noise would be distracting from an attendee hearing a speaker or softer parts of musical performances, speaking parts of live theater, and the like, would benefit from the reduced noise level at the display.

The temporary location, graphical display rental, and staging industries also have a great need for a remote power supply. In these applications setup and teardown time, and service or repair time, should be minimized to meet schedule requirements and provide efficient and cost-effective use. The lighter weight of display modules offers a real advantage, enabled by the present remote power supply, with fewer people and fewer person-hours required for setup, teardown, and repair. The remote power supply could be wheeled into its desired location. This arrangement also makes it easier for technicians to troubleshoot power failures by locating the major power components in one cabinet.

Various modifications can be made to the present invention without departing from the apparent scope thereof.

### REMOTE POWER SUPPLY

### PARTS LIST

- 10: remote power supply
- 15: cabinet
- 20: power units
- 30: AC power input
- 40: DC power output
- 50: AC/DC converter
- 55: module power cord
- 60: cooling system
- 70: redundant power integration and switching system
- 80: display module
- 90: local power distribution board
- 100: redundant power distribution
- 110: power distribution and conditioning system
- 120: DC/DC converter unit
- 130: display element

## Claims

1. Graphical display apparatus comprising a display having a plurality of display modules, and a remote power supply.

2. The apparatus of claim 1, wherein the remote power supply further comprises a plurality of power units, and AC/DC converter, redundant power integration and switching system, and a cooling system.

3. Graphical display apparatus comprising a remote power supply and a local power distribution board.

4. The apparatus of claim 3, further comprising a plurality of local power distribution boards and a plurality of display modules, interconnected so that the local power distribution boards provide redundant supply of power to the display modules.

5. Graphical display apparatus having redundant power supply with a plurality of power units, and a power integration and switching system which adapts the redundant power supply to accommodate a failure in a power unit by supplying power from non-failed power units to seamlessly provide power to a graphical display during such failure condition.

6. A method of providing power to graphical display comprising the steps of:
a. providing a remote power supply and a power transmission cord and a power distribution system and a plurality of display modules; and,
b. using the remote power supply to provide power to the plurality of display modules by transmission via the power transmission cord and the power distribution system.

7. A method of maintenance of a graphical display maintenance comprising the steps of:
a. providing a remote power supply having a plurality of power units and a power integration and switching system and providing a power transmission cord and a power distribution system and a plurality of display modules;
b. using the power integration and switching system to supply power to the display modules during a failure of one of the plurality of power units; and,
c. replacing the failed power unit.

8. A method of maintenance of a graphical display maintenance comprising the steps of:
a. providing redundant power supply with multiple components, and providing a plurality of display modules;
b. using the redundant power supply to supply power to the plurality of display modules during a failure of one of the multiple power supply components; and,
c. replacing the failed power supply component.
